# FASCICULE DE BREVET EUROPEEN

(11) **EP 4 048 502 B1**
(45) Date de publication et mention de la délivrance du brevet: **12.07.2023**
(21) Numéro de dépôt: 20793392.0
(22) Date de dépôt: 26.10.2020
(51) Int. Cl.: B29C 49/78, B29C 49/02, B29C 49/06, B29C 49/58

(54) **DISPOSITIF DE CONTRÔLE DU DÉPLACEMENT D'UN ÉLÉMENT MOBILE POUR MACHINE DE FABRICATION DE RÉCIPIENTS EN MATIÈRE PLASTIQUE**
VORRICHTUNG ZUR STEUERUNG DER BEWEGUNG EINES BEWEGLICHEN ELEMENTES FÜR EINE MASCHINE ZUR HERSTELLUNG VON KUNSTSTOFFBEHÄLTERN
DEVICE FOR CONTROLLING THE MOVEMENT OF A MOVABLE ELEMENT FOR A MACHINE FOR MANUFACTURING PLASTIC RECEPTACLES

(30) Priorité: 24.10.2019 FR 1911893
(43) Date de publication de la demande: 31.08.2022
(73) Titulaire: Sidel Participations, 76930 Octeville-sur-Mer (FR)
(72) Inventeur: LHOMME, Franck, 76930 Octeville-sur-Mer (FR); MICHEL, Jocelyn, 76930 Octeville-sur-Mer (FR)
(74) Mandataire: Sidel Group
(86) Numéro de dépôt international: PCT/EP2020/080017
(87) Numéro de publication internationale: WO 2021/078994

(56) Documents cités:
- EP-A1- 1 980 385
- EP-B1- 1 980 385
- DE-A1-102008 010 885
- US-A1- 2004 009 257
- US-A1- 2018 154 571

## Description

Le domaine de l'invention est celui de la conception et de la fabrication de machines de fabrication de récipients en matière plastique.

Plus précisément, l'invention concerne un dispositif de contrôle du déplacement d'un élément mobile de la machine de fabrication. Des machines de fabrication, ainsi que des procédés associés, selon l'art antérieur, sont décrits dans les documents US2018/154571A1, DE102008010885A1 et EP1980385A1.

Les récipients en matière plastique sont obtenus à partir de préformes qui sont déformées par soufflage ou étirage soufflage pour obtenir leur forme définitive.

Plus particulièrement, les préformes sont chauffées jusqu'à ce que leur matière constitutive atteigne une température de transition vitreuse dans laquelle la matière plastique est suffisamment malléable pour être étirée sans se déchirer.

Les récipients formés sont ensuite transférés vers des unités de traitement dans lesquelles ils sont par exemple décontaminés, remplis, bouchés et étiquetés.

Les unités de traitement comprennent généralement au moins un élément mobile par rapport à un châssis de la machine de fabrication, cet élément mobile étant généralement destiné à venir au contact d'une partie du récipient, ou, à tout le moins, à sa proximité immédiate.

Certaines unités de traitement mettent en oeuvre de l'air sous pression. C'est notamment le cas de l'unité de soufflage qui permet l'injection d'air dans la préforme pour en étirer sa matière constitutive.

L'air est injecté par une tuyère à l'intérieur de la préforme, cette tuyère étant mobile par rapport à un moule dans lequel est reçue la préforme à souffler.

Or, les moules comprennent au moins une partie mobile permettant l'insertion d'une préforme et la sortie d'un récipient soufflé, c'est-à-dire d'un récipient formé.

Le déplacement de l'élément mobile est généralement réalisé par l'utilisation d'un chemin de came qui coopère avec un galet.

Pour permettre une bonne exécution de la fabrication des récipients, la fermeture des moules et la mise en position de la tuyère sont contrôlés.

Une première technique de contrôle se fait à l'oreille.

Selon cette technique, les opérateurs sont vigilants à détecter un bruit anormal provenant de la machine de fabrication. Le cas échéant, les opérateurs peuvent arrêter la machine pour intervenir et la réparer.

Toutefois, cette technique présente un inconvénient majeur.

En effet, l'évaluation du bruit est propre à chaque individu et requiert des opérateurs grandement expérimentés. Par conséquent, à partir d'un même bruit entendu, certains opérateurs peuvent prendre la décision d'arrêter la machine lorsque d'autres laisseront les cycles de production se dérouler.

Par ailleurs, à l'oreille, il est difficile d'identifier quelle est l'élément incriminé, générateur du bruit anormal.

En outre, lorsque les opérateurs entendent un bruit anormal, cela signifie que la machine présente une dégradation et que son arrêt est obligatoire pour réaliser une tâche de maintenance. En d'autres termes, l'intervention de maintenance est réalisée lorsqu'une pièce est cassée sur la machine, ou quasiment, ce qui engendre un coût de changement de la pièce plus important qu'un coût de réparation (lorsque bien entendu la pièce, avant d'être cassée, peut encore être réparée).

Cela veut également dire que la machine de fabrication n'est plus exploitée et donc n'est pas rentable pour son propriétaire.

Pour remédier à cet inconvénient, une deuxième technique a été développée.

Cette deuxième technique a notamment pour but de permettre une maintenance prédictive qui est moins coûteuse qu'une maintenance curative.

En effet, une maintenance prédictive permet de limiter le temps d'immobilisation de la machine et donc de réduire les coûts liés à l'inexploitation de la machine.

Cette deuxième technique consiste à utiliser des capteurs de vibration positionnés sur la machine. Les signaux générés par les capteurs sont alors traités pour réaliser une analyse vibratoire et détecter une répétabilité du signal correspondant à un cycle dit normal. Cette analyse du signal est alors complexe et alourdit la charge de traitement d'une unité informatique de la machine de fabrication.

Lorsque les signaux sont analysés et qu'une déviance par rapport à un signal normal est détectée, alors les opérateurs peuvent anticiper une casse d'une pièce de la machine et planifier une étape de maintenance.

Si cette deuxième technique donne satisfaction sur le temps d'immobilisation de la machine, elle n'en est pas moins dépourvue d'inconvénients.

En effet, les capteurs de vibration présentent un coût important.

De plus, les machines de fabrication de récipients sont des machines de grandes dimensions qui comportent plusieurs unités de traitement accolées.

Dès lors, les vibrations générées par une unité de traitement peuvent être ressenties dans une autre unité de traitement.

Aussi, lors de l'analyse vibratoire, il est nécessaire de nettoyer le signal étudié, c'est-à-dire d'en éliminer le « bruit » qui dégrade le signal.

En d'autres termes, les vibrations parasites liées à une unité adjacente sont atténuées pour obtenir un signal exploitable du seul élément qui doit être contrôlé.

Un tel nettoyage est à la fois coûteux et chronophage si bien qu'il rend cette deuxième technique à la fois longue, ou peu précise si le temps de traitement est réduit pour favoriser les cadences de production.

Une troisième technique réside dans l'utilisation de capteurs tout ou rien. Ce type de capteur est moins onéreux que les capteurs de vibrations mais ne peut pas s'appliquer à une maintenance prédictive.

En effet, ces capteurs permettent de détecter un bon positionnement ou un mauvais positionnement de l'élément mobile. Si c'est un mauvais positionnement qui est détecté, cela signifie qu'il est trop tard et que la maintenance à réaliser n'est pas prédictive mais curative.

Cette troisième technique revient donc à une automatisation de la première technique mais en conserve son inconvénient principal.

L'invention a notamment pour objectif de palier les inconvénients de l'art antérieur

Plus précisément, l'invention a pour but de permettre la réalisation d'un contrôle de la machine afin d'éviter des dégâts trop importants sur celle-ci et de réaliser des opérations de maintenance prédictive.

L'invention a également pour but de permettre d'anticiper un risque de défaillance de la machine de fabrication.

L'invention a en outre pour but de permettre un suivi des modules de fabrication durant la fabrication.

Ces objectifs, ainsi que d'autres qui apparaîtront par la suite, sont atteints grâce à l'invention qui a pour objet une machine de fabrication de récipients en matière plastique, comprenant :
- un châssis présentant un chemin de came ayant une came et une contre came ;
- un élément mobile par rapport au châssis, portant un galet coopérant avec le chemin de came pour assurer le déplacement de l'élément mobile,

la machine comprenant également un dispositif de contrôle du déplacement de l'élément mobile,
caractérisée en ce que la contre came présente au moins une portion mobile par rapport au châssis, le dispositif de contrôle intégrant un capteur de distance mesurant de manière continue la distance de la portion mobile de la contre came par rapport à un point de référence solidaire du châssis,
et en ce que la machine comprend une unité informatique couplée au capteur, l'unité informatique étant paramétrée pour identifier, pour chaque cycle, une variation du déplacement de la portion mobile de la contre came par rapport à un déplacement prédéterminé, comparer ladite variation à une plage de variations autorisées, et émettre une alerte lorsque ladite variation est hors de la plage autorisées.

La mesure continue de la distance de la portion mobile de la contre came par rapport à un point de référence solidaire du châssis permet de détecter une dérive dans le déplacement de l'élément mobile.

Cette dérive, qui est généralement le signe d'une casse future d'une pièce de la machine de fabrication, peut alors être corrigée par le remplacement de pièces, ou mieux leur réparation, permettant de supprimer la dérive détectée.

Toutefois, si la dérive reste légère et constante, cela permet d'identifier un simple déréglage de la machine de fabrication ou la nécessité d'une opération de maintenance pour réaliser le graissage d'un élément par exemple, un tel déréglage ou un tel graissage pouvant être réalisé au prochain arrêt pour maintenance de la machine de fabrication.

L'utilisation d'un capteur de distance permet d'obtenir un signal dépourvu de bruit qui est plus facilement exploitable que les signaux obtenus dans l'art antérieur au moyens de capteurs vibratoires par exemple.

Avantageusement, le capteur est du type inductif.

L'utilisation d'un capteur inductif permet de s'affranchir de certaines contraintes liées au fonctionnement de la machine de fabrication.

En effet, la graisse de la machine, la poussière ou encore l'humidité ne gênent pas l'utilisation d'un capteur de type inductif.

En variante, le capteur est du type optique.

Un tel capteur permet d'obtenir une mesure précise du déplacement de la portion mobile de la contre came par rapport au châssis.

Selon un premier mode de réalisation particulier, la portion mobile de la contre came présente un ajourage, le capteur étant fixé sur le châssis et positionné à l'intérieur de l'ajourage.

Une telle configuration permet de rendre le dispositif de contrôle compact notamment en l'intégrant dans un volume existant mais non utilisé par exemple.

En outre, le positionnement du capteur dans l'ajourage permet de protéger le capteur des éléments extérieurs (graisse, poussière, ...) et des chocs, par exemple avec un autre élément mobile ou fixe de la machine de fabrication.

Selon un deuxième mode de réalisation particulier, le capteur est solidaire de la portion mobile de la contre came.

Cette configuration permet de suivre, également de manière précise, la position de la portion mobile de la contre came par rapport au châssis.

Par ailleurs, lorsque le capteur est solidaire de la portion mobile de la contre came, il suit avec fidélité le mouvement qui est transmis à la portion mobile par le galet, même les mouvements de faible intensité.

L'invention concerne également un procédé de détection d'un risque de défaillance de déplacement d'un élément mobile par rapport à un châssis d'une machine de fabrication de récipients selon l'une quelconque des revendications précédentes,
caractérisé en ce qu'il comprend, pour chaque cycle de fabrication, les étapes :
- d'établissement d'une courbe de distance entre la portion mobile de la contre came et le point de référence solidaire du châssis ;
- d'identification d'une déviation entre la courbe de distance établie et une courbe de distance prédéterminée ;
- de comparaison de la déviation avec une plage de variations autorisées ;
- d'émission d'une alerte si la déviation est hors de la plage de variations autorisées.

Un tel procédé permet de réaliser des étapes de maintenance prédictive puisque le réglage ou la maintenance de la machine peuvent être réalisés lors d'un arrêt planifié de la machine de fabrication. Par ailleurs, ce procédé permet de valider le réglage et/ou l'action de maintenance effectués.

L'immobilisation de la machine pour cause de maintenance peut donc être réduite et les coûts de maintenance moindres comparés aux coûts d'une maintenance curative.

Avantageusement, le procédé comprend également une étape d'identification d'une récurrence de déviation durant laquelle la déviation du cycle analysé est comparée à une série de déviations de cycles précédente pour détecter une dérive croissante de déviation.

L'identification d'une récurrence de déviation permet d'écarter une déviation ponctuelle du mouvement de la portion mobile de la contre came.

En effet, la présence d'un récipient défectueux peut faire dévier le mouvement de la contre came sur un unique cycle, une telle déviation ne demandant alors pas de maintenance particulière.

Selon une forme de réalisation, l'alerte consiste en une transmission d'un effet sonore ou d'un message à un opérateur de production.

Un tel effet sonore ou message peut être perçu par un opérateur sans que celui-ci ne se trouve à proximité de la machine.

Ce dernier peut alors se rendre auprès de la machine émettrice du signal et surveiller son fonctionnement voire réaliser une étape de maintenance si nécessaire.

Selon une autre forme de réalisation, l'alerte consiste en une consigne d'arrêt de la machine de fabrication.

Une telle consigne permet de mettre en sécurité la machine de fabrication afin d'éviter une casse importante de la machine. En d'autres termes, l'arrêt de la machine permet de réaliser une maintenance prédictive avant qu'il ne soit trop tard et que la casse d'une pièce n'endommage complètement la machine et oblige à une maintenance curative.

En variante, l'alerte peut être à la fois une consigne d'arrêt de la machine de fabrication combinée à une transmission d'un effet sonore ou d'un message à un opérateur de production

D'autres caractéristiques et avantages de l'invention apparaîtront plus clairement à la lecture de la description suivante de modes de réalisation préférentiels de l'invention, donnés à titre d'exemples illustratifs et non limitatifs, et des dessins annexés parmi lesquels :
[Fig. 1] est une vue de détail partiel d'une machine de fabrication selon l'invention, selon un premier mode de réalisation ;
[Fig. 2] est une vue de détail partiel d'une machine de fabrication selon l'invention, selon un deuxième mode de réalisation ;
[Fig. 3] est un diagramme de contrôle du déplacement d'un élément mobile de la machine de fabrication selon l'invention, sur plusieurs cycles successifs dans des conditions normales de fonctionnement ;
[Fig. 4] est un diagramme de contrôle du déplacement d'un élément mobile de la machine de fabrication selon l'invention, sur plusieurs cycles successifs dans des conditions anormales de fonctionnement.

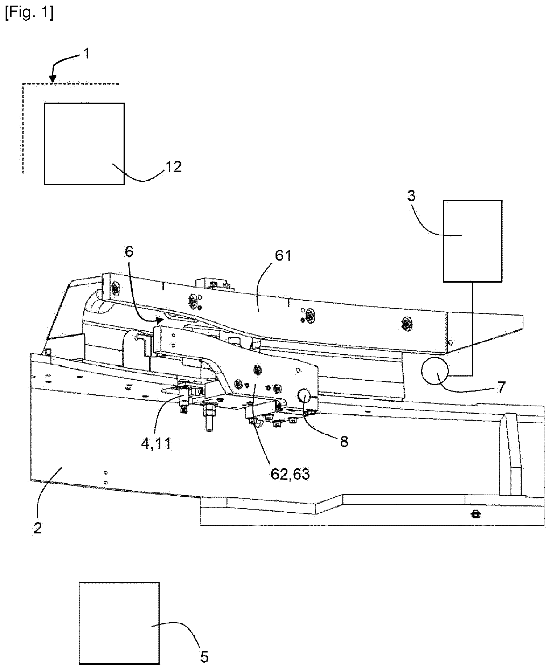

La figure 1 illustre de manière schématique une machine 1 de fabrication de récipients en matière plastique, selon l'invention.

Une telle machine 1 comprend :
- un châssis 2 ;
- un élément 3 mobile par rapport au châssis 2 ;
- un dispositif 4 de contrôle du déplacement de l'élément 3 mobile
- une unité 5 informatique.

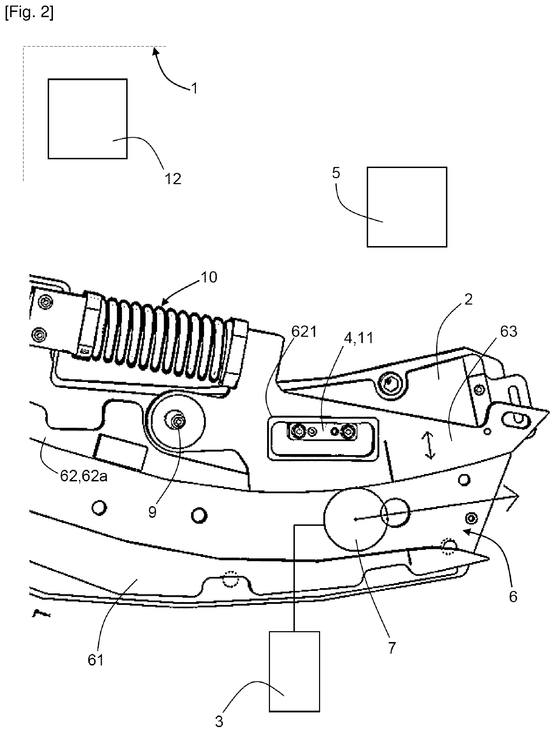

En référence aux figures 1 et 2, le châssis 2 comprend un chemin de came 6 ayant :
- une came 61 ;
- une contre came 62.

Le chemin de came 6 permet de contrôler le déplacement de l'élément 3 mobile comme décrit ci-après.

Pour cela, l'élément 3 mobile porte un galet 7 qui coopère avec le chemin de came 6.

Plus précisément, le galet 7 vient au contact de la came 61 puis, en fin du chemin de came 6, au contact de la contre came 62.

Afin de contrôler le bon déplacement de l'élément 3 mobile, la contre came présente au moins une portion 63 mobile par rapport au châssis 2.

Selon un premier mode de réalisation illustré sur la figure 1, la portion 63 mobile et la contre came 62 ne forme qu'un. En d'autres termes, la contre came 62 est entièrement mobile par rapport au châssis 2 autour d'un premier pivot 8.

Selon un deuxième mode de réalisation illustré sur la figure 2, la portion 63 mobile est formé par une extrémité de la contre came 62. Une première partie 62a de la contre came 62 est alors fixe par rapport au châssis 2, la portion 63 mobile pivote par rapport à la première portion, et donc par rapport au châssis 2, autour d'un deuxième pivot 9.

Dans ce deuxième mode de réalisation, la portion 63 mobile est maintenue dans une position de guidage par des moyens de rappel 10 qui tendent à repousser la portion 63 mobile dans le prolongement de la première partie de la contre came 62. Des moyens de rappel peuvent également être présents pour le premier mode de réalisation.

Autrement dit, dans la position de guidage, la portion 63 mobile présente une surface de guidage du galet 7 qui est tangente à une surface de guidage de la première partie de la contre came 62.

Le dispositif 4 de contrôle du déplacement de l'élément 3 mobile intègre un capteur 11 de distance mesurant de manière continue la distance de la portion 63 mobile de la contre came 62 par rapport à un point de référence solidaire du châssis 2.

Selon une première forme de réalisation, le capteur 11 est du type inductif.

Selon une deuxième forme de réalisation, le capteur 11 est du type optique.

En référence à la figure 1, qui illustre le premier mode de réalisation, le capteur 11 est solidaire de la portion 63 mobile de la contre came 62.

Dans l'exemple illustré en référence à la figure 1, le capteur 11 est solidaire de la contre came 62 puisque la contre came 62 et la portion 63 mobile sont monobloc.

Le capteur 11 suit donc le mouvement de la contre came 62 et mesure de manière continue la distance qui le sépare du châssis 2.

Le point de référence du châssis 2 est alors ici mobile par rapport au capteur puisque le mouvement de rotation de la contre came 62 et la solidarisation du capteur 11 sur la contre came 62 engendrent un déplacement circulaire du capteur 11.

En référence à la figure 2, qui illustre le deuxième mode de réalisation, le capteur 11 est solidaire du châssis 2 et logé dans la portion 63 mobile de la contre came 62.

Plus précisément, la portion 63 mobile de la contre came 62 présente un ajourage 621, le capteur 11 étant fixé sur le châssis 2 et positionné à l'intérieur de l'ajourage 621.

Le point de référence du châssis 2 est alors ici formé par le capteur 11 lui-même, qui mesure alors, de manière continue, sa distance par rapport à un bord de l'ajourage 621.

En fonctionnement, lorsque le galet 7 prend appui et déplace la portion 63 mobile, le capteur 11 se trouve écarté d'une paroi de l'ajourage 621 et enregistre cette distance d'écartement de manière continue. Lorsque le galet 7 n'exerce plus d'effort sur la contre came 62, la portion 63 mobile revient alors à sa position initiale, c'est-à-dire dans le prolongement de la première partie de la contre came 62.

L'unité 5 informatique est couplée au capteur 11 de distance, et est paramétrée pour identifier, via un procédé décrit ci-après, une déviation du déplacement de l'élément 3 mobile.

Plus précisément l'unité 5 informatique est paramétrée pour identifier, pour chaque cycle, une variation du déplacement de la portion 63 mobile de la contre came 62 par rapport à un déplacement prédéterminé, comparer ladite variation à une plage de variations autorisées, et émettre une alerte lorsque ladite variation est hors de la plage de variations autorisés.

Le procédé est un procédé de détection d'un risque de défaillance de déplacement de l'élément 3 mobile par rapport au châssis 2 de la machine 1 de fabrication de récipients.

Ce procédé comprend, pour chaque cycle de fabrication, les étapes :
- d'établissement d'une courbe de distance entre la portion 63 mobile de la contre came 62 et le point de référence solidaire du châssis 2, en fonction du temps par exemple ;
- d'identification d'une déviation entre la courbe de distance établie et une courbe de distance prédéterminée ;
- de comparaison de la déviation avec une plage de variations acceptables ;
- d'émission d'une alerte si la déviation est hors de la plage de variations autorisées.

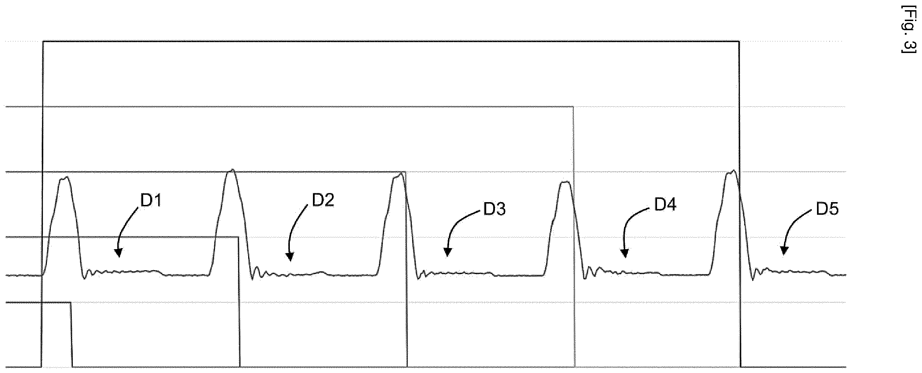

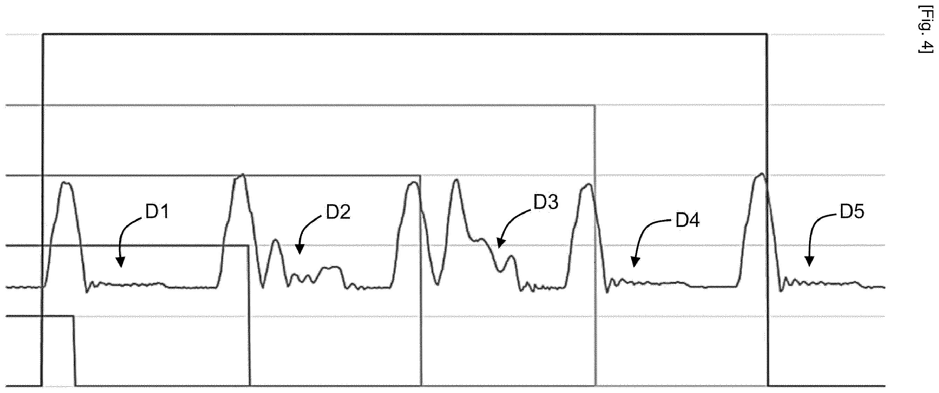

Les figures 3 et 4 illustrent une série de courbes de distance entre la portion 63 mobile de la contre came 62 et le point de référence solidaire du châssis 2.

Plus précisément, les figures 3 et 4 illustrent le déplacement D1, D2, D3, D4, D5 de cinq éléments 3 mobiles différent sur un même chemin de came 6.

Sur la figure 3 tous les déplacements D1, D2, D3, D4, D5 sont normaux, c'est-à-dire qu'aucune déviation n'est perceptible, ces courbes forment notamment les courbes de distance prédéterminée.

En revanche sur la figure 4, les déplacements D2 et D3 présentent une anomalie.

En effet, comparativement aux courbes D2 et D3 de la figure 3, le signal transmis par le capteur 11 présente des variations importantes, signe d'une déviation dans le déplacement des éléments 3 mobiles.

L'unité 5 informatique doit donc transmettre cette information aux opérateurs de production.

Pour cela, la machine 1 comprend un système 12 de signalement, comprenant par exemple un écran, un haut-parleur et/ou un signal lumineux.

Lorsque l'unité 5 informatique détecte une déviation elle pilote donc le système 12 de signalement afin d'alerter les opérateurs de production.

A cet effet, l'alerte peut consister en une transmission d'un effet sonore via le haut-parleur, le cas échéant couplé à un signal lumineux, ou d'un message à un opérateur de production via l'écran par exemple.

Pour plus de précision, le procédé comprend également une étape d'identification d'une récurrence de déviation durant laquelle la déviation du cycle analysé est comparée à une série de déviations de cycles précédents pour détecter une dérive croissante de déviation.

Cela permet notamment de vérifier que la ou les anomalies constatées sur les courbes D1, D2, D3, D4, D5 ne sont pas des cas isolés par exemple sur à la présente temporaire d'un récipient défectueux.

Dans un cas de déviation importante par exemple, l'alerte consiste en une consigne d'arrêt de la machine 1 de fabrication.

Cela permet notamment d'éviter tout risque d'endommagement irréversible de la machine 1 de fabrication.

Grâce à la machine 1 de production et au procédé qui viennent d'être décrits, il est possible de suivre un éventuel dérèglement de la machine 1 et de procéder à une maintenance prédictive avant une casse importante de la machine 1.

En outre, le procédé permet de suivre l'évolution du dérèglement et éventuellement d'identifier une cause du dérèglement.

## Revendications

1. Machine (1) de fabrication de récipients en matière plastique, comprenant :
- un châssis (2) présentant un chemin de came (6) ayant une came (61) et une contre came (62) ;
- un élément (3) mobile par rapport au châssis (2), portant un galet (7) coopérant avec le chemin de came (6) pour assurer le déplacement de l'élément (3) mobile,
la machine (1) comprenant également un dispositif (4) de contrôle du déplacement de l'élément (3) mobile,
**caractérisée en ce que** la contre came (62) présente au moins une portion (63) mobile par rapport au châssis (2), le dispositif (4) de contrôle intégrant un capteur (11) de distance mesurant de manière continue la distance de la portion (63) mobile de la contre came (62) par rapport à un point de référence solidaire du châssis (2), et **en ce que** la machine (1) comprend une unité (5) informatique couplée au capteur (11), l'unité (5) informatique étant paramétrée pour identifier, pour chaque cycle, une variation du déplacement de la portion (63) mobile de la contre came (62) par rapport à un déplacement prédéterminé, comparer ladite variation à une plage de variations autorisées, et émettre une alerte lorsque ladite variation est hors de la plage de variations autorisées.

2. Machine (1) de fabrication selon la revendication précédente, **caractérisée en ce que** le capteur (11) est du type inductif.

3. Machine (1) de fabrication selon la revendication 1, **caractérisée en ce que** le capteur (11) est du type optique.

4. Machine (1) de fabrication selon l'une quelconque des revendications 1 à 3, **caractérisée en ce que** la portion (63) mobile de la contre came (62) présente un ajourage (621), le capteur (11) étant fixé sur le châssis (2) et positionné à l'intérieur de l'ajourage (621).

5. Machine (1) de fabrication selon l'une quelconque des revendications 1 à 3, **caractérisée en ce que** le capteur (11) est solidaire de la portion (63) mobile de la contre came (62).

6. Procédé de détection d'un risque de défaillance de déplacement d'un élément (63) mobile par rapport à un châssis (2) d'une machine (1) de fabrication de récipients selon l'une quelconque des revendications précédentes,
**caractérisé en ce qu'**il comprend, pour chaque cycle de fabrication, les étapes :
- d'établissement d'une courbe de distance entre la portion (63) mobile de la contre came (62) et le point de référence solidaire du châssis (2) ;
- d'identification d'une déviation entre la courbe de distance établie et une courbe de distance prédéterminée ;
- de comparaison de la déviation avec une plage de variations autorisées ;
- d'émission d'une alerte si la déviation est hors de la plage de variations autorisées.

7. Procédé selon la revendication précédente, **caractérisé en ce qu'**il comprend également une étape d'identification d'une récurrence de déviation durant laquelle la déviation du cycle analysé est comparée à une série de déviations de cycles précédente pour détecter une dérive croissante de déviation.

8. Procédé selon l'une des revendications 6 ou 7, **caractérisé en ce que** l'alerte consiste en une transmission d'un effet sonore ou d'un message à un opérateur de production.

9. Procédé selon l'une des revendications 6 à 8, **caractérisé en ce que** l'alerte consiste en une consigne d'arrêt de la machine de fabrication.

## Patentansprüche

1. Maschine (1) zur Herstellung von Behältern aus Kunststoff, umfassend:
- ein Gestell (2) mit einer Nockenbahn (6), die einen Nocken (61) und einen Gegennocken (62) aufweist;
- ein Element (3), das in Bezug auf das Gestell (2) beweglich ist und eine Rolle (7) trägt, die mit der Nockenbahn (6) zusammenwirkt, um die Bewegung des beweglichen Elements (3) zu gewährleisten, wobei die Maschine (1) außerdem eine Vorrichtung (4) zur Steuerung der Bewegung des beweglichen Elements (3) umfasst,
**dadurch gekennzeichnet, dass** der Gegennocken (62) mindestens einen Abschnitt (63) umfasst, der in Bezug auf das Gestell (2) beweglich ist, wobei in die Steuervorrichtung (4) ein Abstandssensor (11) integriert ist, der kontinuierlich den Abstand des beweglichen Abschnitts (63) des Gegennockens (62) in Bezug auf einen fest mit dem Gestell (2) verbundenen Referenzpunkt misst, und dass die Maschine (1) eine mit dem Sensor (11) gekoppelte Informatikeinheit (5) umfasst, wobei die Informatikeinheit (5) so parametriert ist, dass sie für jeden Zyklus eine Veränderung der Bewegung des beweglichen Abschnitts (63) des Gegennockens (62) in Bezug auf eine vorbestimmte Bewegung identifiziert, die Veränderung mit einem Bereich zulässiger Veränderungen vergleicht und eine Warnung ausgibt, wenn die Veränderung außerhalb des Bereichs zulässiger Veränderungen liegt.

2. Herstellungsmaschine (1) nach dem vorangehenden Anspruch, **dadurch gekennzeichnet, dass** der Sensor (11) vom induktiven Typ ist.

3. Herstellungsmaschine (1) nach Anspruch 1, **dadurch gekennzeichnet, dass** der Sensor (11) vom optischen Typ ist.

4. Herstellungsmaschine (1) nach einem der Ansprüche 1 bis 3, **dadurch gekennzeichnet, dass** der bewegliche Abschnitt (63) des Gegennockens (62) einen Durchbruch (621) aufweist, wobei der Sensor (11) am Gestell (2) befestigt und innerhalb des Durchbruchs (621) angeordnet ist.

5. Herstellungsmaschine (1) nach einem der Ansprüche 1 bis 3, **dadurch gekennzeichnet, dass** der Sensor (11) fest mit dem beweglichen Abschnitt (63) des Gegennockens (62) verbunden ist.

6. Verfahren zur Erkennung eines Ausfallrisikos einer Bewegung eines beweglichen Elements (63) in Bezug auf ein Gestell (2) einer Maschine (1) zur Herstellung von Behältern nach einem der vorangehenden Ansprüche, **dadurch gekennzeichnet, dass** es für jeden Herstellungszyklus die folgenden Schritte umfasst:
- Erstellen einer Kurve des Abstands zwischen dem beweglichen Abschnitt (63) des Gegennockens (62) und dem fest mit dem Gestell (2) verbundenen Referenzpunkt;
- Identifizieren einer Abweichung zwischen der erstellten Abstandskurve und einer vorbestimmten Abstandskurve;
- Vergleichen der Abweichung mit einem Bereich zulässiger Veränderungen;
- Ausgeben einer Warnung, wenn die Abweichung außerhalb des Bereichs zulässiger Veränderungen liegt.

7. Verfahren nach dem vorangehenden Anspruch, **dadurch gekennzeichnet, dass** es außerdem einen Schritt des Identifizierens einer Abweichungsrekurrenz umfasst, während dessen die Abweichung des analysierten Zyklus mit einer vorherigen Reihe von analysierten Zyklen verglichen wird, um eine zunehmende Abweichungsdrift zu detektieren.

8. Verfahren nach einem der Ansprüche 6 oder 7, **dadurch gekennzeichnet, dass** die Warnung in der Übertragung eines Klangeffekts oder einer Nachricht an einen Produktionsmitarbeiter besteht.

9. Verfahren nach einem der Ansprüche 6 bis 8, **dadurch gekennzeichnet, dass** die Warnung in einer Anweisung zum Anhalten der Herstellungsmaschine besteht.

## Claims

1. Plastic container manufacturing machine (1), comprising:
- a chassis (2) having a camway (6) with a cam (61) and a countercam (62);
- an element (3) which is movable relative to the chassis (2), bearing a roller (7) interacting with the camway (6) so as to ensure the displacement of the movable element (3) ,
the machine (1) also comprising a device (4) for controlling the displacement of the movable element (3), **characterized in that** the countercam (62) has at least one portion (63) which is movable relative to the chassis (2), the control device (4) incorporating a distance sensor (11) that continuously measures the distance of the movable portion (63) of the countercam (62) relative to a fixed reference point on the chassis (2),
and **in that** the machine (1) comprises a computer unit (5) coupled to the sensor (11), the computer unit (5) being parametrized to identify, for each cycle, a variation in the displacement of the movable portion (63) of the countercam (62) relative to a predetermined displacement, to compare said variation to a range of authorized variations, and to send a warning when said variation is outside of the range of authorized variations.

2. Manufacturing machine (1) according to the preceding claim, **characterized in that** the sensor (11) is of the inductive type.

3. Manufacturing machine (1) according to Claim 1, **characterized in that** the sensor (11) is of the optical type.

4. Manufacturing machine (1) according to any one of Claims 1 to 3, **characterized in that** the movable portion (63) of the countercam (62) has an aperture (621), the sensor (11) being fixed on the chassis (2) and positioned inside the aperture (621).

5. Manufacturing machine (1) according to any one of Claims 1 to 3, **characterized in that** the sensor (11) is integral with the movable portion (63) of the countercam (62) .

6. Method for detecting a risk of displacement failure of an element (63) which is movable relative to a chassis (2) of a container manufacturing machine (1) according to any one of the preceding claims,
**characterized in that** it comprises, for each manufacturing cycle, the following steps:
- establishing a distance curve between the movable portion (63) of the countercam (62) and the fixed reference point on the chassis (2);
- identifying a deviation between the distance curve established and a predetermined distance curve;
- comparing the deviation with a range of authorized variations;
- sending a warning if the deviation is outside the range of authorized variations.

7. Method according to the preceding claim, **characterized in that** it also comprises a step of identifying a deviatory recurrence, throughout which the deviation of the analysed cycle is compared with a previous cycle deviation series so as to detect an increasing deviatory drift.

8. Method according to either of Claims 6 and 7, **characterized in that** the warning consists in transmitting a sound effect or a message to a production operator.

9. Method according to one of Claims 6 to 8, **characterized in that** the warning consists in transmitting an instruction to stop the manufacturing machine.
